(19)

**Europäisches Patentamt**

**European Patent Office**

**Office européen des brevets**

(11) **EP 4 711 876 A1**

(12) **EUROPEAN PATENT APPLICATION**

published in accordance with Art. 153(4) EPC

(43) Date of publication:
**18.03.2026 Bulletin 2026/12**

(21) Application number: **23937587.6**

(22) Date of filing: **12.05.2023**

(51) International Patent Classification (IPC):
*G05D 1/20* (2024.01)   *B25J 9/16* (2006.01)
*B25J 5/00* (2006.01)

(52) Cooperative Patent Classification (CPC):
**G05D 1/6987; B25J 5/00; B25J 9/16; G05D 1/20;
G05D 1/693;** G05D 2105/28; G05D 2107/70;
G05D 2109/10

(86) International application number:
**PCT/KR2023/006483**

(87) International publication number:
**WO 2024/237355 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Bear Robotics Korea, Inc.
Seoul 04780 (KR)**

(72) Inventor: **LEE, Sungmin
Seoul 06772 (KR)**

(74) Representative: **Murgitroyd & Company
165-169 Scotland Street
Glasgow G5 8PL (GB)**

(54) **PLURALITY OF MOBILE ROBOT SYSTEMS AND MOBILE ROBOT CONTROL METHOD THEREOF**

(57)     The present disclosure relates to a mobile robot system comprising: a plurality of mobile robots disposed in a specific space and traveling in the specific space along respective traveling paths; and a server which periodically receives state values from the plurality of mobile robots and generates and transmits detour paths for densely gathered mobile robots among the plurality of mobile robots in response to the crowdedness of the space on the basis of the state values and a global map of the space. The mobile robots receiving the detour paths can travel in the specific space by updating the traveling paths according to the detour paths. According to the present disclosure, when a plurality of mobile robots are operated to travel in the same specific space, collisions between the mobile robots can be prevented in real time. In addition, avoidance paths can be generated in real time without additional obstacle sensing of the plurality of mobile robots. Detour paths are calculated with a small amount of calculation, enabling reduction of the amount of calculation, calculation time, and costs.

FIG. 1

EP 4 711 876 A1

**Description**

**TECHNICAL FIELD**

The present disclosure provides a robot system in a specific space including a plurality of mobile robots. More particularly, the present disclosure relates to a control method of a mobile robot system that generates and provides a real-time detour path for each mobile robot traveling along an individual travel path within a specific space.

**BACKGROUND**

Robots have been developed for industrial use and have been responsible for a part of factory automation. Recently, the application fields of robots have been further expanded, and robots such as medical robots and aerospace robots have been developed, as well as household robots that can be used in ordinary homes. Among these robots, those capable of self-driving are referred to as autonomous mobile robots.

As the use of robots increases, there is growing demand for robots that can provide various types of information and services, beyond simply performing repetitive functions.

Accordingly, robots may be disposed in stores, public places, warehouses, ports, or factories to perform tasks such as transporting goods to specific locations or conducting patrol operations.

In general, the travel paths of autonomous mobile robots may be divided into global path planning and local path planning.

Global path planning refers to an operation of generating a travel path from the starting point to a destination based on a global map before the mobile robot starts to travel.

Local path planning refers to a process in which, while following the travel path generated through global path planning, the robot updates the travel path thereof in real time through real-time sensing to avoid obstacles present on the travel path.

However, when a mobile robot having a travel path according to global path planning performs real-time sensing based on a global map within a specific space, the signal processing operations for sensing signals from the multiple mobile robots traveling in the same space increase significantly, resulting in high time and cost requirements.

In addition, a system including a plurality of mobile robots is defined as a processing and communication framework for various events occurring in a space, based on technologies such as cloud computing and CPS (Cyber-Physical System).

Cloud computing provides virtualized resources of information and communication technology as services based on Internet technology.

Through cloud computing, users may use resources of information and communication technology (for example, servers, storage, networks, and software) as needed.

When a cloud server is to control numerous mobile robots through cloud computing, a relay server may be further included for each space for convenience of control or communication. In this case, only a minimum number of sensing signals should be transmitted for convenience of communication and data simplification.

Korean Patent No. 1679482 discloses a multi robot system for avoiding obstacle and a method using switching formation strategy for obstacle avoidance.

The multi-robot obstacle avoidance method includes a step in which a sensor attached to the follower robot checks the distance between the follower robots, and a controller of the follower robot determines whether a collision will occur, and a step in which the follower robots cooperate with a leader robot to switch to an obstacle avoidance formation. However, it only discloses the relationship between the follower robots and fails to disclose response in real time to collisions between robots that autonomously move along different paths.

[Prior Art Document]

Korean Patent No. 10-1679482, Publication Date: November 18, 2016

**DISCLOSURE**

**Technical Problem**

A first object of the present disclosure is to provide a detour path through which collisions between a plurality of mobile robots that are operated in real time may be avoided during operation.

A second object of the present disclosure is to provide a mobile robot system capable of predicting collision possibilities and providing detour paths by receiving only real-time position information obtained by generating only a global map without performing local map generation.

A third object of the present disclosure is to provide a real-time detour path for preventing collisions by correcting the detour path according to the width of a path on a global map.

**Technical Solution**

The present disclosure provides a mobile robot system including a plurality of mobile robots disposed in a specific space to travel along respective travel paths in the specific space, and a server configured to periodically receive state values from the plurality of mobile robots, and to generate detour paths for congested mobile robots among the plurality of mobile robots according to a congestion level of the space based on the state values and a global map of the space and transmit the generated detour paths to the congested mobile robots.

The mobile robots receiving the detour paths may update the travel paths thereof according to the detour paths to travel in the specific space.

The mobile robot system may further include a relay server assigned to the specific space to communicate with the server and control the plurality of mobile robots in the specific space.

The mobile robots may periodically transmit information about current positions of the mobile robots and the travel paths to the server as the state values.

The server may be configured to combine the information about the current positions of the mobile robots, and extract, as a pair of mobile robots requiring the detour path, a pair of mobile robots spaced apart from each other by a distance less than or equal to a threshold among the mobile robots.

Based on the distance between the mobile robots being less than or equal to the threshold and less than or equal to a topology node interval on the global map, the server may generate emergency detour paths. Based on the distance between the mobile robots being less than or equal to the threshold and greater than the topology node interval, the server may generate normal detour paths.

The server may be configured to set an overlapped section on inverse vectors on the travel paths of the extracted pair of mobile robots as an initial overlapped section, set a temporally overlapped section of movements of the pair of mobile robots in the initial overlapped section as an overlapped period, and generate the normal detour paths with respect to the overlapped period.

The server may generate two normal detour paths followed by the pair of mobile robots shifted to the same side at opposite ends of the overlapped period.

When generating the emergency detour paths, the server may set a section having overlapping inverse vectors of the congested pair of mobile robots between the current positions and destinations of the congested pair of mobile robots as an overlapped section, set virtual nodes within the overlapped section, and generate the emergency detour paths based on the virtual nodes.

Based on a narrow road being present within the overlapped section on the global map of the specific space, the server may generate the normal detour paths or the emergency detour paths excluding the narrow road.

Based on the normal detour paths or the emergency detour paths having the narrow road being transmitted to the mobile robots, a mobile robot entering the narrow road first between the mobile robots may pass through the narrow road first, and the other mobile robot may maintain a waiting mode outside the narrow road.

The present disclosure provides a control method for controlling a plurality of mobile robots disposed in a specific space to travel along respective travel paths in the specific space. The control method may include periodically receiving state values from the plurality of mobile robots, calculating a congestion level of the space based on the state values and a global map of the space, extracting a congested pair of mobile robots among the plurality of mobile robots, and generating detour paths for the congested pair of mobile robots and transmitting the generated detour paths to the pair of mobile robots.

The control method may further include receiving, by the mobile robots, the detour paths, and updating the travel paths to the detour paths to continuously travel in the specific space.

The receiving of the state values may include periodically receiving, from each of the mobile robots, information about current positions of the mobile robots and the travel paths as the state values.

The extracting of the congested pair of mobile robots may include extracting the information about the current positions of the plurality of the mobile robots, and calculating the information about the current positions and extracting, as the congested pair of mobile robots, the pair of mobile robots spaced part from each other by a distance less than or equal to a threshold.

The generating of the detour paths may include, based on the distance between the mobile robots being less than or equal to the threshold and less than or equal to a topology node interval on the global map, generating emergency detour paths, and based on the distance between the mobile robots being less than or equal to the threshold and greater than the topology node interval, generating normal detour paths.

The control method may further include setting an overlapped section on inverse vectors on the travel paths of the congested pair of mobile robots as an initial overlapped section, setting a temporally overlapped section of movements of the pair of mobile robots in the initial overlapped section as an overlapped period, and generating the normal detour paths with respect to the overlapped period.

Two normal detour paths followed by the congested pair of mobile robots are generated by shifting the congested pair of mobile robots to the same side at opposite ends of the overlapped period.

The generating of the emergency detour paths may include setting a section having overlapping inverse vectors of the congested pair of mobile robots between the current positions and destinations of the congested pair of mobile robots as an overlapped section, setting virtual nodes within the overlapped section, and generating the emergency detour paths based on the virtual nodes.

Based on a narrow road being present within the overlapped section on the global map of the specific space, the normal detour paths or the emergency detour paths excluding the narrow road may be generated.

## Advantageous Effects

Through the above solutions, the present disclosure may prevent collisions between mobile robots in real time when a plurality of mobile robots is operated to travel within the same specific space.

In addition, a detour path may be generated in real time without additional obstacle sensing by a plurality of mobile robots. By generating the detour path with a small computational load, the amount of computation, computation time, and cost may be reduced.

Furthermore, depending on the local characteristics of the current global path, the possibility of collision may be further reduced by sequentially moving the robots rather than selecting a detour path on a narrow road.

## BRIEF DESCRIPTION OF THE DRAWINGS

FIG. 1 is a schematic diagram illustrating a plurality of mobile robot systems according to an embodiment of the present disclosure.

FIG. 2 is a detailed diagram of an individual mobile robot system of FIG. 1.

FIG. 3 is a configuration diagram according to one application example of the cloud server of FIG. 2.

FIG. 4 is an operation diagram of a congestion detector of the cloud server according to an embodiment of the present disclosure.

FIG. 5 is a schematic diagram showing the distances between a plurality of mobile robots in a mobile robot system.

FIG. 6 is an operation diagram of a detour path generator of the cloud server according to an embodiment of the present disclosure.

FIGS. 7A and 7B are schematic diagrams illustrating the operations of FIG. 6.

FIG. 8 is an operation diagram of an emergency detour path generator of the cloud server according to an embodiment of the present disclosure.

FIGS. 9A and 9B are schematic diagrams illustrating the operations of FIG. 8.

FIG. 10 is an operation diagram illustrating detour path generation in a case where a narrow road is present on a global map.

FIG. 11 is a schematic diagram illustrating the operations of FIG. 10.

FIGS. 12A and 12B show simulations of the movements of robots according to FIG. 11.

## BEST MODE

The use of terms such as "first," "second," and the like preceding component names in the following description is merely for the purpose of distinguishing between components and does not imply any order, importance, or hierarchical relationship among the components. For example, an embodiment including only a second component without a first component may also be implemented.

In the drawings, the thickness or dimensions of each component may be exaggerated, omitted, or schematically illustrated for convenience and clarity of description. The dimensions and area of each component do not necessarily reflect their actual dimensions or area.

In addition, angles and directions mentioned in the description of the structure of the present disclosure are based on those indicated in the drawings. When the reference points and positional relationships for the angles are not clearly specified in the description, the relevant drawings should be referred to.

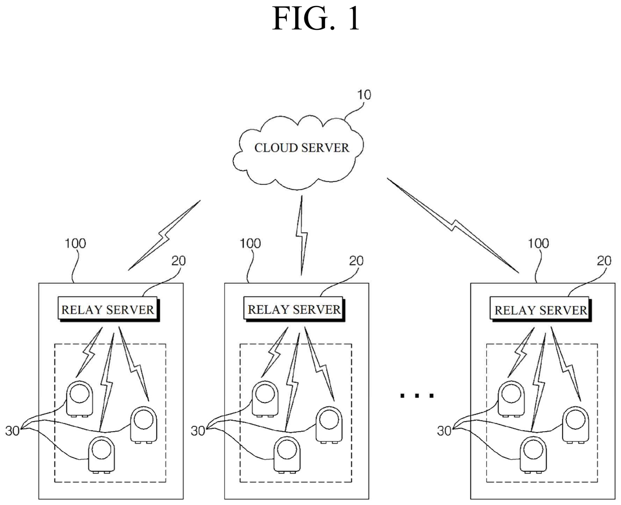

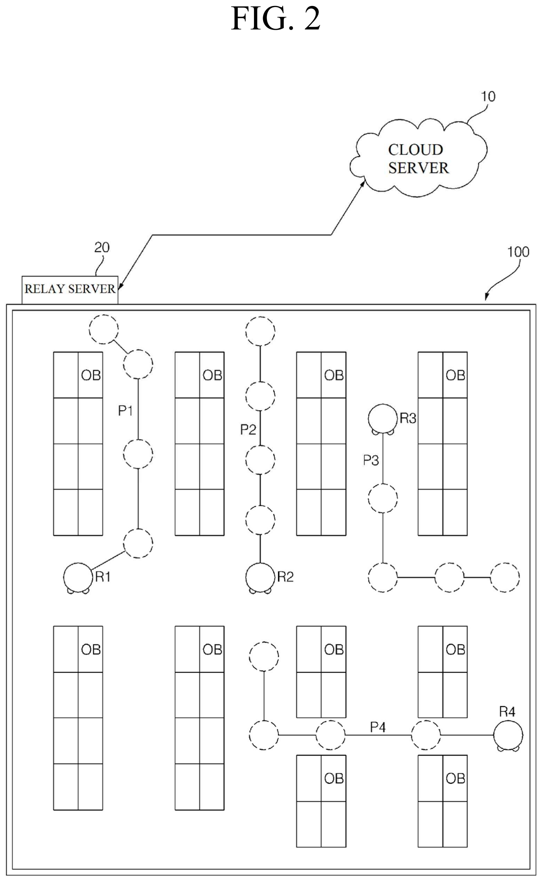

FIG. 1 is a schematic diagram illustrating a plurality of mobile robot systems according to an embodiment of the present disclosure, and FIG. 2 is a detailed diagram of an individual mobile robot system of FIG. 1.

Referring to FIG. 1, the plurality of mobile robot systems according to an embodiment of the present disclosure may include a cloud server 10, a plurality of relay servers 20, and a plurality of mobile robots 30.

The cloud-based robot system integrally manages and controls the plurality of robots 30 distributed in various spaces that are spaced apart from one another.

The spaces are functionally or geographically separate from one another, and each relay server 20 is provided in each space to control the plurality of robots 30 disposed therein.

Homogeneous robots 30 may be disposed in each space. Alternatively, heterogeneous robots 30 may be disposed.

For example, in space 1 (A1), a relay server 20 may be provided, and a plurality of delivery robots and surveillance robots 30 (R1, R2, R3, R4) may be disposed.

The homogeneous or heterogeneous robots 30 disposed in each space may provide assigned services communicate with the relay server 20 provided in the space or the cloud server 10 to.

According to an embodiment of the present disclosure, a plurality of mobile robots 30 and each relay server 20 are provided in each space, and the cloud robot system includes a cloud server 10 configured to communicate with each of the relay servers 20 and mobile robots 30, to generate travel paths P1, P2, P3, and P4 of the respective mobile robots 30 based on global map information related to the spaces in which the respective mobile robots 30 move, to provide the generated travel paths to the respective mobile robots 30, and to provide real-time corrected and updated paths.

The relay server 20 monitors the states of the plurality of robots 30 within an assigned space at a short distance, periodically receives state values from the plurality of mobile robots 30, and transmits the received values to the cloud server 10.

In addition, the relay server 20 may transmit the corrected travel path information related to each robot 30 received from the cloud server 10 to the corresponding mobile robot 30 to control the mobile robot 30 to change the travel path in real time and travel along the corrected travel path.

The plurality of mobile robots 30, relay servers 20, and the cloud server 10 may include communication means (not shown) supporting one or more communication standards to communicate with each other.

For example, the plurality of mobile robots 30, relay servers 20, and the cloud server 10 may be implemented to communicate wirelessly using wireless communication technologies such as IEEE 802.11 WLAN, IEEE 802.15 WPAN, UWB, Wi-Fi, Zigbee, Z-Wave, or Bluetooth. The communication method used by the mobile robots 30 may vary depending on the communication method used by the other devices, the cloud server 10, or the relay server 20.

In particular, the plurality of mobile robots 30 may perform wireless communication with other robots 30 and/or relay servers 20, and the cloud server 10 over a 5G network. When the mobile robots 30 perform wireless communicate over the 5G network, ultra-low latency/ultrahigh-capacity data transmission may be performed

More specifically, the 5G network is a communication technology that provides transmission speeds of several tens of Gbps in a wireless section, and enables multiple modules to perform data transmission at speeds of Gbps or higher and ultra-low latency in the order of milliseconds to meet service-specific quality requirements for ultra-low latency/ultra-high capacity/ultra-realistic data. Such a 5G network can offer network quality equivalent to that of a high-speed wired network while providing the advantages of wireless communication at the same time.

Such a 5G network may be controlled to provide services optimized for each mobile robot 30 and each space between the robots 30 and the relay servers 20, between the relay servers 20 and the cloud server 10, and between the robots 30 and the cloud server 10 in the cloud-based robot system.

Additionally, the plurality of mobile robots 30 and relay servers 20 may communicate using MQTT (Message Queueing Telemetry Transport) or HTTP (HyperText Transfer Protocol), but the communication scheme is not limited thereto.

In some cases, the robots 30, relay servers 20, and cloud server 10 may support two or more communication standards and use an optimal communication standard according to the type of communication data and devices involved in the communication.

In this specification, the term "user" refers to a person who provides or uses services through the plurality of robots 30. The user may include individual customers who purchase or rent the robots 30 for use in workplaces, managers or employees of companies that provide services to staff or customers using the robots 30, and customers who use services provided by such companies. Thus, "user" may include both individual customers (Business-to-Consumer, B2C) and corporate customers (Business-to-Business, B2B).

The cloud server 10 stores global map information related to each space to control a plurality of physically distributed robots 30, generates travel paths for the respective mobile robots 30 according to the global map information and assigned tasks, and provides the generated paths to the respective mobile robots 30 via the relay servers 20. In addition, the cloud server 10 generates detour paths by correcting stored travel paths according to the state values of the mobile robots 30 in real time and provides the detour paths to the mobile robots 30 via the relay servers 20.

The cloud server 10 generates a path generation model or engine for the mobile robots 30 in each space. The base model or engine may include a general-purpose model or engine applicable to similar mobile robots 30 according to the environment of the mobile robot system.

The cloud server 10 may receive environment information related to each local space, i.e., each space where a plurality of mobile robots 30 is disposed, i.e., the global map information, as well as the number and task tables of the mobile robots, and perform deep learning considering both the number and the tables to upgrade the base model such that the model is optimized for the environment.

As illustrated in FIG. 2, the relay server 20 may be provided in each space, communicate with a plurality of homogeneous or heterogeneous robots 30 disposed in the space, and communicate with the cloud server 10 to control the robots 30.

The relay server 20 is implemented to use a technology that processes data in an edge area where the data is generated, instead of processing the data through the cloud server 10, such that data requiring real-time processing is processed by the relay server 20, and when necessary, secondary operations are performed through communication with the central cloud.

As shown in FIG. 2, each relay server 20 is disposed in one separately defined virtual space or physically separated space and controls a plurality of robots 30 disposed in the space to provide services.

For example, as shown in FIG. 2, a relay server 20 may control a plurality of robots 30 (R1 to R4) that provide goods transportation services within a warehouse, wherein the plurality of robots 30 may include transport robots and surveillance robots.

As such, the plurality of mobile robots 30 disposed in a given space operate under control of the corresponding relay server 20 while communicating with the relay server 20and the cloud server 10. Once operation begins, the mobile robots travel along the received paths p1 to p4 and perform assigned tasks.

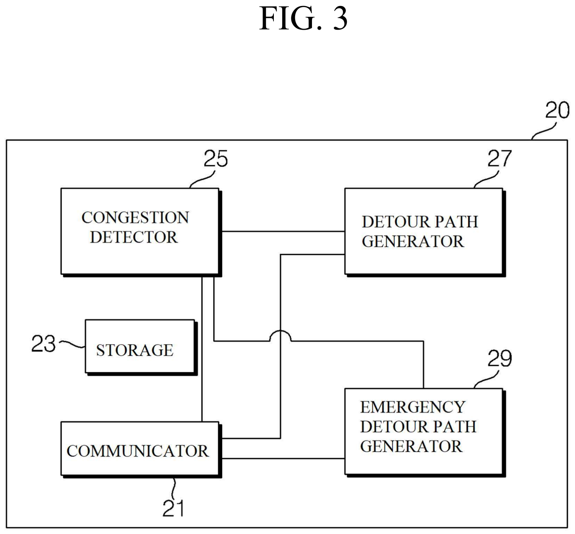

FIG. 3 is a configuration diagram according to one application example of the cloud server 10 of FIG. 2.

Referring to FIG. 3, the cloud server 10 may include a communicator 11, a storage 13, a congestion detector 15, a detour path generator 17, and an emergency detour path generator 19.

Specifically, in the cloud server 10, the storage 13 may store an algorithm capable of performing processing for generating travel paths and detour paths for each robot based on the global map information related to each space, and may store and manage data acquired from a plurality of homogeneous or heterogeneous mobile robots 30 in each space based on IoT technology.

The storage 13 may include various storage devices such as ROM, RAM, EPROM, flash drive, and hard drive, or may be a web storage performing the storage function of the storage 13 on the Internet.

In some embodiments, the software components stored in the storage 13 may include an operating system, a communication module (or a set of instructions), a contact/motion module (or a set of instructions), a graphic module (or a set of instructions), a text input module (or a set of instructions), a Global Positioning System (GPS) module (or a set of instructions), and applications (or sets of instructions).

The communicator 11 of the cloud server 10, as described above, may perform various types of communication depending on the communication method required for the environment. In particular, communication may be performed between the robot 30 and the relay server 20, between the relay server 20 and the cloud server 10, and between the robot 30 and the cloud server 10 over a 5G network.

The cloud server 10 individually generates travel paths P1 to P4 for the respective mobile robots 30 based on a global map. Here, the global map refers to a map of the working environment used by the mobile robots 30, in which information about static obstacles, which are areas to which the mobile robots 30 cannot move, is predefined. The travel paths generated by the cloud server 10 are referred to as initial travel paths P1 to P4.

For example, referring to FIG. 2, the cloud server 10 allocates travel paths P1 to P4 along which the respective mobile robots 30 (R1 to R4) will travel for a predetermined period in each space, considering static obstacles defined in the global map.

According to one embodiment of the present disclosure, the cloud server 10 may generate the initial travel paths P1 to P4 using an A* (A star) algorithm or an RRT (Rapidly exploring Random Tree) algorithm.

The congestion detector 15 of the cloud server 10 periodically receives state value information related to each robot 30 (R1 to R4) from the communicator 11, determines the current movement points and travel paths of the mobile robots 30 (R1 to R4) in operation, and calculates the distances between the plurality of mobile robots 30 (R1 to R4) in the same space.

The congestion detector 15 periodically receives current movement point information related to the mobile robots 30 from each relay server 20, and calculates the distances between the plurality of mobile robots 30 (R1 to R4) for each period. When the calculated distance is less than or equal to a threshold, the congestion detector determines that congestion is likely to occur.

When congestion is likely to occur, the congestion detector 15 transmits information about the corresponding pair of mobile robots to the detour path generator 17.

The detour path generator 17 receives a list of robot pairs for which the calculated value is less than or equal to the threshold from the congestion detector 15 and generates detour paths for the pairs of mobile robots, respectively.

The detour paths are generated based on the global map information. A local map may not be generated as real-time sensing information is not received from the mobile robots 30 (R1 to R4). The detour paths may be generated only by comparing and processing the global map information and the initial travel paths P1 to P4.

When the distances between the plurality of mobile robots 30 (R1 to R4) calculated by the congestion detector 15 are shorter than an interval between topology nodes, the emergency detour path generator 19 generates an emergency detour path.

The emergency detour path generator 19 receives information about the corresponding pair of robots R, generates an emergency detour path, and provides the generated path to the corresponding mobile robots 30 (R1 to R4) through the communicator 11.

As described above, the cloud server 10 periodically receives, via the relay server 20, state values, i.e., current positions of the respective mobile robots 30 (R1 to R4) and travel path information related to the robots in real time and compares the same with each other to predict congestion possibilities and generate and provide detour paths according to the prediction.

In this operation, the cloud server 10 may generate detour paths in different ways depending on whether the relevant section on the global map is a wide road or a narrow road.

Hereinafter, the operations of each functional module of the cloud server 10 will be described.

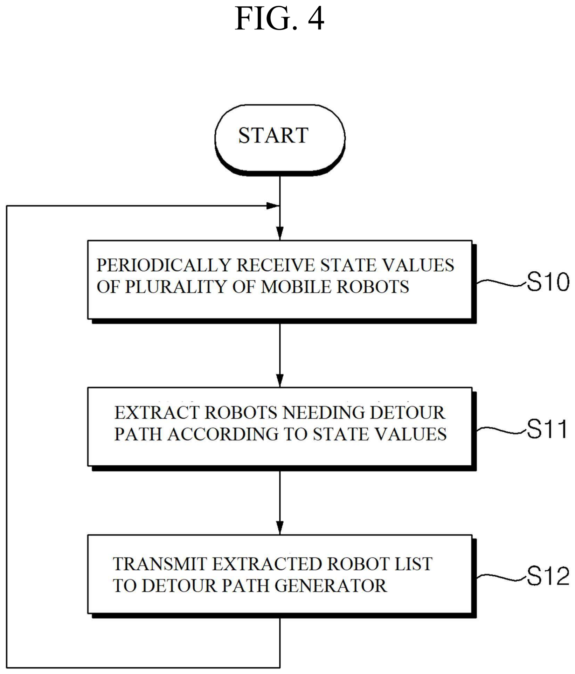

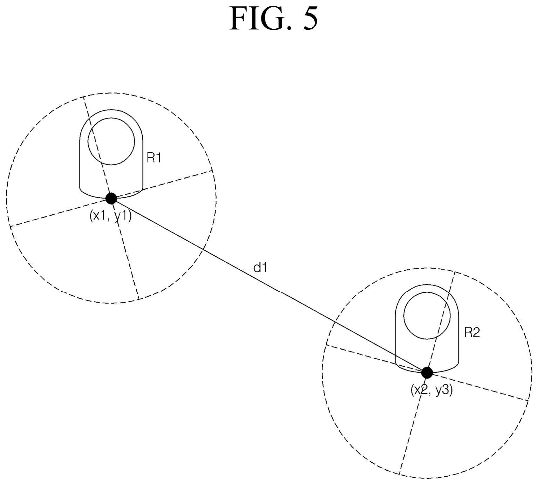

FIG. 4 is an operation diagram of the congestion detector 15 of the cloud server 10 according to an embodiment of the present disclosure, and FIG. 5 is a schematic diagram showing the distances between a plurality of mobile robots 30 (R1 to R4) in a mobile robot system.

Referring to FIG. 4, multiple mobile robots R1 and R2 moving in the same space has information about travel paths P1 and P2 set according to the global map for the space, and travel through the space along the travel paths P1 and P2.

The mobile robots R1 and R2 periodically transmit the state values thereof, that is, current position information and stored information about the travel paths P1 and P2, to the cloud server via the relay server 20 (S10).

The congestion detector 15 of the cloud server 10 periodically receives the state values of the mobile robots R1 and R2 and determines whether there is a pair of robots in a highly congested area where the distance between the mobile robots R1 and R2 in the same space is less than or equal to a threshold based on the current positions of the mobile robots R1 and R2.

Specifically, as shown in FIG. 5, when the current position information related to the mobile robots R1 and R2 in the current period is received, the distance d1 between a first robot R and a second robot R is calculated as shown in Equation 1.

[Equation 1]

$$d1 = \sqrt{(x1 - x2)^2 + (y1 - y2)^2}$$

The congestion detector 15 extracts a pair of mobile robots R1 and R2 for which the distance d1 between the current positions of the mobile robots R1 and R2 received in the current period is less than a threshold (S11).

In this case, when the value of d1 that is less than or equal to the threshold and is less than the topology node interval TP on the global map, the information related to pair of robots R is transmitted to the emergency detour path generator 19.

When the value of d1 is greater than the topology node interval and less than or equal to the threshold, it is determined that congestion is likely to occur, and the information about the robot pair is transmitted to the detour path generator 17 (S12).

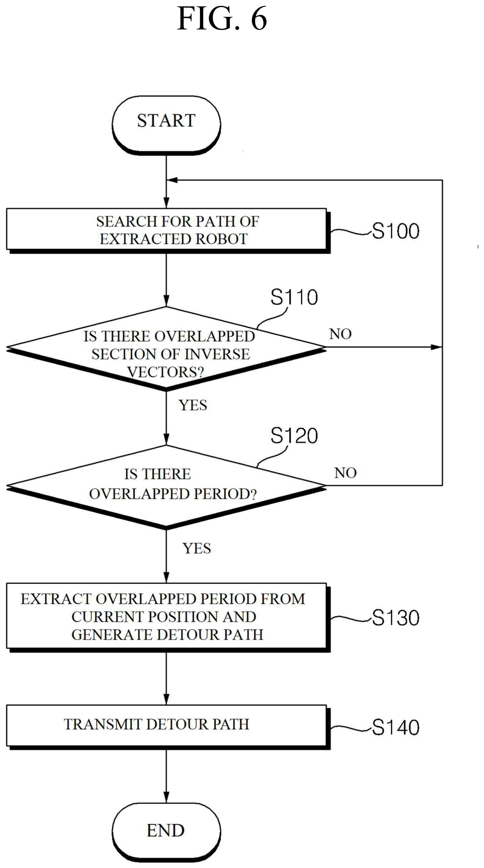

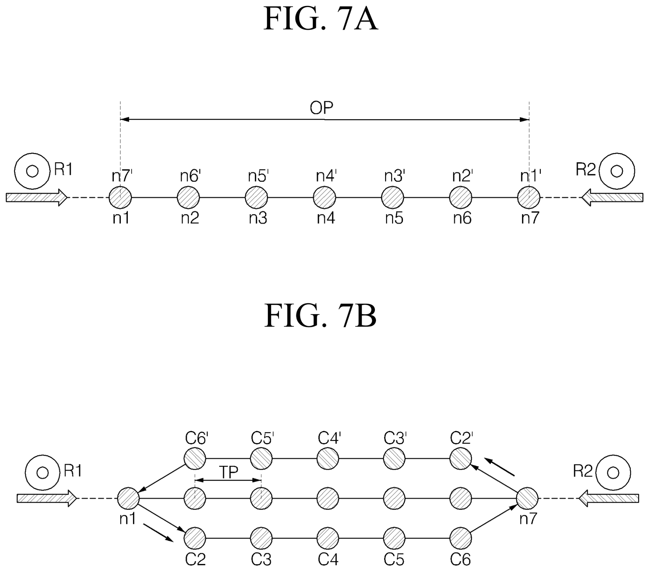

FIG. 6 is an operation diagram of the detour path generator 17 of the cloud server 10 according to an embodiment of the present disclosure, and FIGS. 7A and 7B are schematic diagrams illustrating the operations of FIG. 6.

Referring to FIGS. 6, 7A, and 7B, the detour path generator 17 receives, from the congestion detector 15, a list of pairs of robots which are at a distance less than or equal to a real-time threshold from each other, as well as information about the corresponding mobile robots.

From the extracted robot pairs, the current position information and travel path information related to each of the mobile robots R1 and R2 are extracted and checked (S100).

The travel paths of the robot pair are compared with each other to determine whether there is an overlapped section on inverse vectors (S110).

That is, when the first robot R1 and the second robot R2 are extracted as a congestion-risk pair, it is determined whether an overlapped section is present in inverse vector directions on the travel paths of the robots, which is referred to as an initial overlapped section.

Next, as shown in FIG. 7A, based on the current positions of both robots R1 and R2, the detour path generator calculates the travel speeds of the robots and determines whether a temporal overlapped period (OP) is present (S120).

The OP may be less than or equal to the initial overlapped section. When the OP is present, topology nodes n1 to n7 are indicated in the OP as shown in FIG. 7A.

For example, in FIG. 7A, the OP may be a section between the first node n1 and the seventh node n7 in the section between the first robot R1 and the second robot R2.

Next, the detour path generator 17 generates detour paths for the first robot R1 and the second robot R2 based on the current positions of the robots to bypass the OP (S130).

For each of the robots R1 and R2, a detour path may be generated to shift the OP to a first side with respect to the forward direction of the OP.

For example, detour paths may be generated to shift both the first robot R1 and the second robot R2 to the right with respect to the forward direction.

That is, for the first robot R1, a detour path may be generated such that the robot detours to the right at the first node n1, passes through detour points c2 to c6, and returns to the seventh node n7.

For the second robot R2, a detour path may be generated such that the robot detours to the right at the seventh node n7, passes through detour points c2' to c6', and returns to the first node n1.

Once the detour paths are generated for each of the robots R1 and R2, paths are provided that allow the first robot R1 and the second robot R2 to bypass each other in the OP without colliding with each other.

The detour path generator 17 transmits the generated detour path information related to each of the robots R1 and R2 to the relay server 20 through the communicator 11, and the relay server 20 transmits the information to the robots R1 and R2 (S140).

The mobile robots R1 and R2 may change the real-time paths thereof according to the received detour paths to avoid collisions.

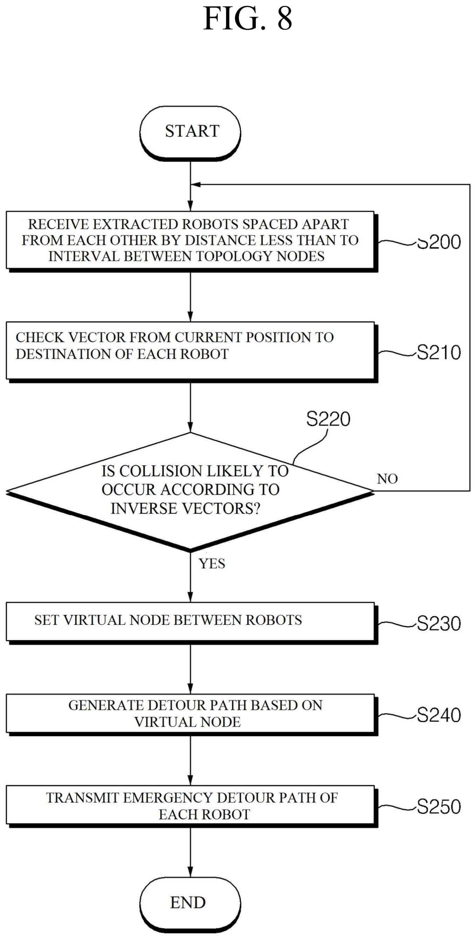

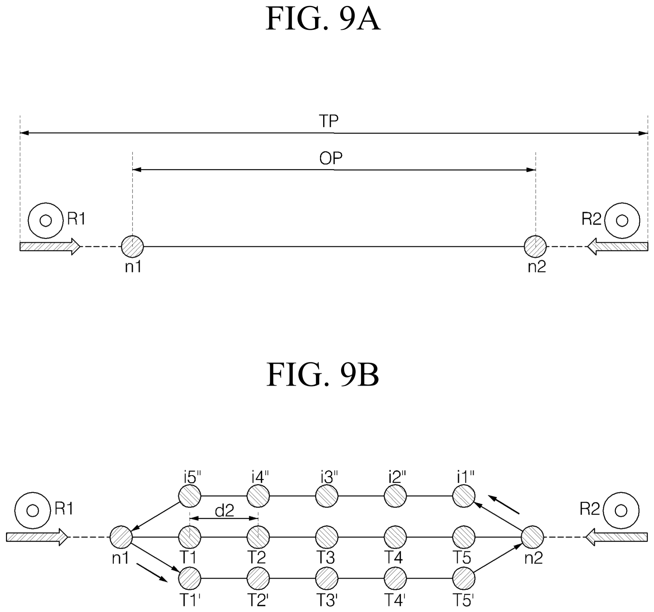

FIG. 8 is an operation diagram of the emergency detour path generator 19 of the cloud server according to an embodiment of the present disclosure, and FIGS. 9A and 9B are schematic diagrams illustrating the operations of FIG. 8.

Referring to FIGS. 8, 9A, and 9B, the emergency detour path generator 19 receives, from the congestion detector 15, a list of robot pairs whose robots 30 are spaced apart from each other by a real-time distance that is less than or equal to a threshold and less than or equal to a topology node interval TP, along with the information about the corresponding mobile robots R (S200).

From the extracted robot pair, the current position information and travel path information related to each of the mobile robots R1 and R2 are extracted.

Then, the travel paths of the mobile robots R1 and R2 of the robot pair are compared to check for a collision possibility.

Specifically, as shown in FIG. 9A, vectors from the current positions of the robots R1 and R2 to the respective destinations thereof are checked (S210). When the vectors of the two robots R1 and R2 have an overlapped period op while forming inverse vectors, it is determined that there is a possibility of collision (S220).

That is, when the distance between the first robot R1 and the second robot R2 is very short and an overlapped period op is found in which the vectors of the first robot R1 and the second robot R2 are inverse vectors, a virtual node is set within the overlapped period op (S230).

Since the overlapped period op is shorter than the topology node interval TP, no topology node can be represented in the period. Accordingly, virtual nodes i1 to i5 arranged shorter intervals than the topology nodes are set as shown in FIG. 9B.

For example, in FIG. 9B, the overlapped period op in which virtual nodes are set may be a section between the first node n1 and the second node n2 in between the first robot R1 and the second robot R2.

Next, the emergency detour path generator 19 generates emergency detour paths for the first robot R1 and the second robot R2 for the overlapped period op (S240).

At this time, for each of the robots R1 and R2, an emergency detour path is provided to shift the robots from the overlapped period OP to a first side.

For example, emergency detour paths may be generated to shift both the first robot R1 and the second robot R2 to the right with respect to the forward direction.

That is, for the first robot R1, an emergency detour path may be generated such that the first robot detours to the right from the first node n1, passes through detour points from a first detour point i1' to a fifth detour point i5', and returns to the second node n2.

For the second robot R2, an emergency detour path may be generated such that the second robot detours to the right from the second node n2, passes through detour points from a sixth detour point i1" to a tenth detour point i5", and returns to the first node n1.

Once the emergency detour paths are generated for each of the robots R1 and R2, paths are provided that allow the first robot R1 and the second robot R2 to bypass each other in the overlapped period OP without collision.

The emergency detour path generator 19 transmits the generated emergency detour path information related to each of the robots R1 and R2 to the relay server 20 through the communicator 11, and the relay server 20 transmits the information to the robots R1 and R2 (S250).

The mobile robots R1 and R2 may change the real-time paths thereof according to the received emergency detour paths to avoid collisions.

As such, by receiving the current position information related to a plurality of mobile robots 30 in the same space in real time and continuously calculating the relative distances to update detour paths between robots 30 at a close distance, the mobile robots 30 traveling within the same space may move without colliding with each other.

Additionally, as the mobile robots 30 avoid collisions by correcting travel paths initially set based on the global map without performing obstacle detection in real time, the amount of computation may be dramatically reduced.

The detour path generator 17 and the emergency detour path generator 19 may correct detour paths according to the stored global map.

Hereinafter, the operation of generating a corrected detour path based on the global map will be described.

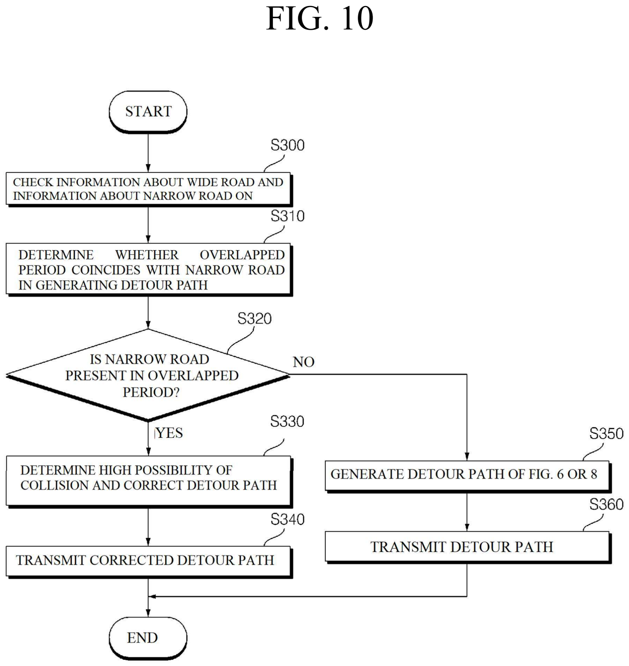

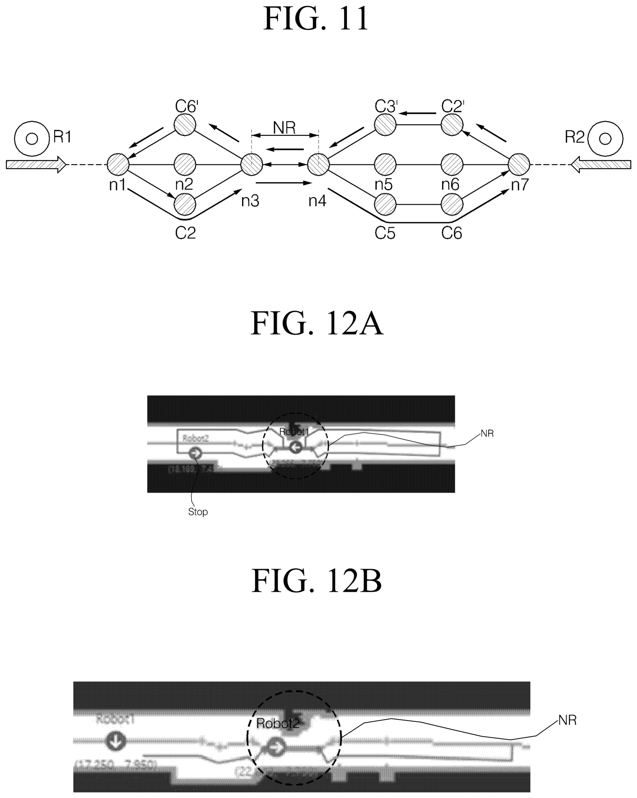

FIG. 10 is an operation diagram illustrating detour path generation in a case where a narrow road is present on a global map, FIG. 11 is a schematic diagram illustrating the operations of FIG. 10, and FIGS. 12A and 12B show simulations of the movement of robots R according to FIG. 11.

The detour path generator 17 and the emergency detour path generator 19 of the cloud server 10 distinguish information about wide roads and information about narrow roads within the global map information (S300).

In this regard, a wide road is defined as a path having a width that allows two mobile robots 30 to travel along the path simultaneously, and a narrow road road is defined as a path along which only one mobile robot 30 can travel but two mobile robots 30 cannot travel at the same time.

With wide roads distinguished from narrow roads in the global map information related to each space, the detour path generator 17 and the emergency detour path generator 19 generate detour paths and emergency detour paths, respectively, for the extracted robot pairs.

Then, it is determined whether the overlapped period coincides with a narrow road in the global map information (S310).

That is, when at least a portion of the overlapped period OP coincides with a narrow road (S320), it is determined that the feasibility of a detour path for bypassing the narrow road is low, and the detour path is corrected (S330).

Specifically, when the overlapped period (OP) and the narrow road partially coincide, the detour path is formed excluding the overlapping portion.

For example, as shown in FIG. 11, when the OP of the first robot R1 and the second robot R2 is between the first node n1 and the seventh node n7, it may be determined that the section between the third node n3 and the fourth node n4 in the OP coincides with a narrow road (NR). When it is determined that a portion of the OP is the NR, the detour path is corrected to bypass the section between the first node n1 and the third node n3 and the section between the fourth node n4 and the seventh node n7, excluding the third node n3 and the fourth node n4.

The corrected detour path generated in this way allows the first robot R1 to travel from the first node n1 through the second detour point c2 to reach the third node n3, pass through the NR, and then follow the detour path again from the fourth node n4, and reach the seventh node n7 through the fifth detour point c5 and the sixth detour point c6.

On the corrected detour path, detour points may be generated such that the robot shifts to a specific direction, for example, to the right of the OP in front thereof.

The corrected detour path of the second robot R2, which enters the OP in the opposite vector direction, allows the robot to travel from the seventh node n7 through the seventh detour point c2' and the eighth detour point c3' to reach the fourth node n4, pass through the NR, and then follow the detour path again from the third node n3 to reach the first node n1 via the ninth detour point c6'.

Then, the corrected detour paths is transmitted to the first robot R1 and the second robot R2, which have a high probability of collision, and the first robot R1 and the second robot R2 update the set travel paths according to the corrected detour paths and travel along the corrected detour paths (S340).

When the first robot R1 and the second robot R2 reach the NR, the robot R1 that first enters the third node n3 and the fourth node n4 may be set to pass through the NR first.

The order of passing through the narrow road NR may be transmitted when transmitting the corrected detour path, but embodiments are not limited thereto.

The order of passing through the NR may be calculated based on the current positions, distances to the NR, and current speeds of the robots R1 and R2, assuming that the robots R1 and R2 continue to travel at the current speeds thereof.

As shown in FIG. 12A, the first robot R1 and the second robot R2 traveling in the overlapped period travel along the corrected detour paths. When they encounter the NR, the second robot R2 waits in a stopped state until the first robot R1, which enters the narrow road NR first, completely passes through the path.

As shown in FIG. 12B, after the first robot R1 completely exits the narrow road NR, the second robot R2 enters the narrow road NR and travels along the corrected detour path. Accordingly, the corrected detour paths of the two robots R1 and R2 are temporally separated on the narrow road NR, and the subsequent travel along the corrected paths occurs independently without traveling over corresponding nodes at the same time.

However, even when the timings do not overlap as described above, the state value for the current position is transmitted again in the next cycle to newly perform the travel path search. Thus, subsequent travel is not affected.

When the NR is present in the OP (S350), the detour path generator 17 and the emergency detour path generator 19 of the cloud server 10 generate detour paths and emergency detour paths, respectively, according to the flowcharts of FIG. 6 and FIG. 8 and transmit the generated paths to the respective robots 30 via the relay server (S360).

As described above, the cloud server 30 may receive information about the global map of each space and the state values of a plurality of mobile robots 30 in each space in real time, and may correct and provide travel paths for the global map information.

Such correction of the travel paths may be implemented based only on the global map information without generating a local map. Accordingly, the robots 30 may not be required to perform obstacle detection, and thus the cost of expensive obstacle sensors such as LiDAR and the cost of processing of sensor values may be significantly reduced.

In addition, by calculating the risk of collision on the initially set travel paths from the global map based on the relative distances between a plurality of robots 30 and deriving detour paths accordingly, computation may be greatly simplified.

The robot system according to the present disclosure is not limited to the configurations and methods of the embodiments described above, and various modifications may be made to the embodiments by selectively combining all or part of the embodiments.

The control method of the robot system according to the embodiment of the present disclosure may be implemented as a code readable by a processor on a processor-readable recording medium. The processor-readable recording medium includes all types of recording devices that store data readable by the processor. Examples of the processor-readable recording medium include ROM, RAM, CD-ROM, magnetic tape, floppy disk, and optical data storage devices, as well as implementations in the form of carrier waves such as transmission on the Internet. In addition, the processor-readable recording medium may be distributed across computer systems connected over a network, allowing codes readable by a processor to be stored and executed in a distributed manner.

Although preferred embodiments of the present disclosure have been illustrated and described above, the present disclosure is not limited to the specific embodiments described herein, and various modifications may be made by those skilled in the art without departing from the spirit or scope of the present disclosure as defined by the claims. Such modifications should not be interpreted separately from the spirit or scope of the present disclosure.

[List of Reference Numerals]

| 10: | Cloud server | 20: | Relay server |
| 30: | Mobile robot | | |

**Claims**

1. A mobile robot system comprising:

    a plurality of mobile robots disposed in a specific space to travel along respective travel paths in the specific space; and
    a server configured to periodically receive state values from the plurality of mobile robots, and to generate detour paths for congested mobile robots among the plurality of mobile robots according to a congestion level of the space based on the state values and a global map of the space and transmit the generated detour paths to the congested mobile robots.

2. The mobile robot system of claim 1, wherein the mobile robots receiving the detour paths update the travel paths thereof according to the detour paths to travel in the specific space.

3. The mobile robot system of claim 2, further comprising:
    a relay server assigned to the specific space to communicate with the server and control the plurality of mobile robots in the specific space.

4. The mobile robot system of claim 1, wherein the mobile robots periodically transmit information about current positions of the mobile robots and the travel paths to the server as the state values.

5. The mobile robot system of claim 4, wherein the server is configured to:

   combine the information about the current positions of the mobile robots; and
   extract, as a pair of mobile robots requiring the detour path, a pair of mobile robots spaced apart from each other by a distance less than or equal to a threshold among the mobile robots.

6. The mobile robot system of claim 5, wherein, based on the distance between the mobile robots being less than or equal to the threshold and less than or equal to a topology node interval on the global map, the server generates emergency detour paths,
   wherein, based on the distance between the mobile robots being less than or equal to the threshold and greater than the topology node interval, the server generates normal detour paths.

7. The mobile robot system of claim 6, wherein the server is configured to:

   set an overlapped section on inverse vectors on the travel paths of the extracted pair of mobile robots as an initial overlapped section;
   set a temporally overlapped section of movements of the pair of mobile robots in the initial overlapped section as an overlapped period; and
   generate the normal detour paths with respect to the overlapped period.

8. The mobile robot system of claim 7, wherein the server generates two normal detour paths followed by the pair of mobile robots shifted to the same side at opposite ends of the overlapped period.

9. The mobile robot system of claim 8, wherein when generating the emergency detour paths, the server is configured to:

   set a section having overlapping inverse vectors of the congested pair of mobile robots between the current positions and destinations of the congested pair of mobile robots as an overlapped section;
   set virtual nodes within the overlapped section; and
   generate the emergency detour paths based on the virtual nodes.

10. The mobile robot system of claim 8 or 9, wherein, based on a narrow road being present within the overlapped section on the global map of the specific space, the server generates the normal detour paths or the emergency detour paths excluding the narrow road.

11. The mobile robot system of claim 10, wherein, based on the normal detour paths or the emergency detour paths having the narrow road being transmitted to the mobile robots, a mobile robot entering the narrow road first between the mobile robots passes through the narrow road first, and the other mobile robot maintains a waiting mode outside the narrow road.

12. A control method for controlling a plurality of mobile robots disposed in a specific space to travel along respective travel paths in the specific space, the control method comprising:

   periodically receiving state values from the plurality of mobile robots;
   calculating a congestion level of the space based on the state values and a global map of the space;
   extracting a congested pair of mobile robots among the plurality of mobile robots; and
   generating detour paths for the congested pair of mobile robots and transmitting the generated detour paths to the pair of mobile robots.

13. The control method of claim 12, further comprising:
   receiving, by the mobile robots, the detour paths, and updating the travel paths to the detour paths to continuously travel in the specific space.

14. The control method of claim 13, wherein the receiving of the state values comprises:
   periodically receiving, from each of the mobile robots, information about current positions of the mobile robots and the travel paths as the state values.

15. The control method of claim 14, wherein the extracting of the congested pair of mobile robots comprises:

extracting the information about the current positions of the plurality of mobile robots; and
calculating the information about the current positions and extracting, as the congested pair of mobile robots, the pair of mobile robots spaced part from each other by a distance less than or equal to a threshold.

16. The control method of claim 15, wherein the generating of the detour paths comprises:

based on the distance between the mobile robots being less than or equal to the threshold and less than or equal to a topology node interval on the global map, generating emergency detour paths; and
based on the distance between the mobile robots being less than or equal to the threshold and greater than the topology node interval, generating normal detour paths.

17. The control method of claim 16, further comprising:

setting an overlapped section on inverse vectors on the travel paths of the congested pair of mobile robots as an initial overlapped section;
setting a temporally overlapped section of movements of the pair of mobile robots in the initial overlapped section as an overlapped period; and
generating the normal detour paths with respect to the overlapped period.

18. The control method of claim 17, wherein two normal detour paths followed by the congested pair of mobile robots are generated by shifting the congested pair of mobile robots to the same side at opposite ends of the overlapped period.

19. The control method of claim 18, wherein the generating of the emergency detour paths comprises:

setting a section having overlapping inverse vectors of the congested pair of mobile robots between the current positions and destinations of the congested pair of mobile robots as an overlapped section;
setting virtual nodes within the overlapped section; and
generating the emergency detour paths based on the virtual nodes.

20. The control method of claim 18 or 19, wherein, based on a narrow road being present within the overlapped section on the global map of the specific space, the normal detour paths or the emergency detour paths excluding the narrow road are generated.

# FIG. 1

# FIG. 2

# FIG. 3

# FIG. 4

START

PERIODICALLY RECEIVE STATE VALUES OF PLURALITY OF MOBILE ROBOTS — S10

EXTRACT ROBOTS NEEDING DETOUR PATH ACCORDING TO STATE VALUES — S11

TRANSMIT EXTRACTED ROBOT LIST TO DETOUR PATH GENERATOR — S12

FIG. 5

# FIG. 6

START

SEARCH FOR PATH OF EXTRACTED ROBOT — S100

IS THERE OVERLAPPED SECTION OF INVERSE VECTORS? — S110

NO

YES

IS THERE OVERLAPPED PERIOD? — S120

NO

YES

EXTRACT OVERLAPPED PERIOD FROM CURRENT POSITION AND GENERATE DETOUR PATH — S130

TRANSMIT DETOUR PATH — S140

END

# FIG. 7A

OP

R1

n7'    n6'    n5'    n4'    n3'    n2'    n1'

n1    n2    n3    n4    n5    n6    n7

R2

# FIG. 7B

R1

C6'    C5'    C4'    C3'    C2'

TP

n1      n7

C2    C3    C4    C5    C6

R2

EP 4 711 876 A1

# FIG. 8

START

RECEIVE EXTRACTED ROBOTS SPACED APART FROM EACH OTHER BY DISTANCE LESS THAN TO INTERVAL BETWEEN TOPOLOGY NODES — S200

CHECK VECTOR FROM CURRENT POSITION TO DESTINATION OF EACH ROBOT — S210

S220
IS COLLISION LIKELY TO OCCUR ACCORDING TO INVERSE VECTORS? — NO

YES

SET VIRTUAL NODE BETWEEN ROBOTS — S230

GENERATE DETOUR PATH BASED ON VIRTUAL NODE — S240

TRANSMIT EMERGENCY DETOUR PATH OF EACH ROBOT — S250

END

# FIG. 9A

# FIG. 9B

# FIG. 10

START

S300
CHECK INFORMATION ABOUT WIDE ROAD AND INFORMATION ABOUT NARROW ROAD ON

S310
DETERMINE WHETHER OVERLAPPED PERIOD COINCIDES WITH NARROW ROAD IN GENERATING DETOUR PATH

S320
IS NARROW ROAD PRESENT IN OVERLAPPED PERIOD?

NO

YES

S330
DETERMINE HIGH POSSIBILITY OF COLLISION AND CORRECT DETOUR PATH

S350
GENERATE DETOUR PATH OF FIG. 6 OR 8

S340
TRANSMIT CORRECTED DETOUR PATH

S360
TRANSMIT DETOUR PATH

END

# FIG. 11

# FIG. 12A

# FIG. 12B

# INTERNATIONAL SEARCH REPORT

| International application No. |
|---|
| **PCT/KR2023/006483** |

| A. | CLASSIFICATION OF SUBJECT MATTER |
|---|---|

**G05D 1/20**(2024.01)i; **B25J 9/16**(2006.01)i; **B25J 5/00**(2006.01)i

According to International Patent Classification (IPC) or to both national classification and IPC

| B. | FIELDS SEARCHED |
|---|---|

Minimum documentation searched (classification system followed by classification symbols)

G05D 1/20(2024.01); B25J 9/16(2006.01); G01C 21/00(2006.01); G05D 1/02(2006.01); G06F 16/29(2019.01); G06Q 10/08(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 로봇(robot), 서버(server), 전역 지도(global map), 밀집도(density), 우회 경로 (detour route), 거리(distance), 토폴로지 노드(topology node)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2021-0156413 A (CLOBOT CO., LTD.) 27 December 2021 (2021-12-27) See paragraphs [0032]-[0042] and [0053]-[0056]; and figures 1-3. | 1-5,12-15 |
| A | | 6-11,16-20 |
| Y | KR 10-2473630 B1 (NAVER LABS CORPORATION) 02 December 2022 (2022-12-02) See paragraphs [0279], [0345] and [0764]; and figures 1 and 13. | 1-5,12-15 |
| A | KR 10-2021-0127952 A (LOCUS ROBOTICS CORP.) 25 October 2021 (2021-10-25) See paragraphs [0041]-[0052]; and figure 9. | 1-20 |
| A | KR 10-2462491 B1 (NAVER LABS CORPORATION) 03 November 2022 (2022-11-03) See paragraphs [0032]-[0041]; and figure 1. | 1-20 |
| A | KR 10-2022-0138438 A (HYUNDAI MOTOR COMPANY et al.) 13 October 2022 (2022-10-13) See paragraphs [0079]-[0081]; and figure 10. | 1-20 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 February 2024** | **01 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/006483**

| Patent document cited in search report | | | Publication date (day/month/year) | Patent family member(s) | | | Publication date (day/month/year) |
|---|---|---|---|---|---|---|---|
| KR | 10-2021-0156413 | A | 27 December 2021 | KR | 10-2022-0113910 | A | 17 August 2022 |
| | | | | KR | 10-2593662 | B1 | 25 October 2023 |
| KR | 10-2473630 | B1 | 02 December 2022 | KR | 10-2023-0002040 | A | 05 January 2023 |
| | | | | KR | 10-2023-0002119 | A | 05 January 2023 |
| | | | | KR | 10-2558767 | B1 | 21 July 2023 |
| | | | | WO | 2023-277346 | A1 | 05 January 2023 |
| KR | 10-2021-0127952 | A | 25 October 2021 | AU | 2020-215719 | A1 | 06 August 2020 |
| | | | | AU | 2023-210596 | A1 | 24 August 2023 |
| | | | | CA | 3128198 | A1 | 06 August 2020 |
| | | | | CN | 113661506 | A | 16 November 2021 |
| | | | | EP | 3903261 | A1 | 03 November 2021 |
| | | | | JP | 2022-519054 | A | 18 March 2022 |
| | | | | JP | 7369779 | B2 | 26 October 2023 |
| | | | | US | 11724395 | B2 | 15 August 2023 |
| | | | | US | 2020-0246972 | A1 | 06 August 2020 |
| | | | | US | 2023-0202042 | A1 | 29 June 2023 |
| | | | | WO | 2020-160459 | A1 | 06 August 2020 |
| KR | 10-2462491 | B1 | 03 November 2022 | KR | 10-2462500 | B1 | 03 November 2022 |
| | | | | WO | 2022-234925 | A1 | 10 November 2022 |
| KR | 10-2022-0138438 | A | 13 October 2022 | US | 2022-0276654 | A1 | 01 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1679482